# EUROPÄISCHE PATENTANMELDUNG

(11) **EP 3 806 020 A1**
(43) Veröffentlichungstag der Anmeldung: **14.04.2021**
(21) Anmeldenummer: 19201766.3
(22) Anmeldetag: 07.10.2019
(51) Int. Cl.: G06Q 30/06, G06Q 10/08

(54) **VERFAHREN FÜR EINE AUTOMATISIERTE REGALVORRICHTUNG EINES INTELLIGENTEN LAGER- ODER KOMMISSIONIERUNGSSYSTEMS**

(71) Anmelder: SWG Schraubenwerk Gaisbach GmbH, 74638 Waldenburg (DE)
(72) Erfinder: DORN, Oliver, 74638 Waldenburg (DE); MANN, Johann, 74638 Waldenburg (DE); DÜNGEL, Sebastian, 74638 Waldenburg (DE)
(74) Vertreter: Maiwald Patent- und Rechtsanwaltsgesellschaft mbH

(57) **Zusammenfassung**

Die vorliegende Erfindung betrifft ein Verfahren für eine automatisierte Regalvorrichtung eines intelligenten Lager- oder Kommissionierungssystems, wobei das Verfahren folgende Verfahrensschritte aufweist: Bereitstellen (S1) von Planogrammdaten, welche die automatisierte Regalvorrichtung abbilden und welche digitale Regalpläne der automatisierten Regalvorrichtung umfassen und welche sukzessiv erweiterbar sind; Bereitstellen (S2) von Produktinformationsdaten, welche in der automatisierten Regalvorrichtung platzierte Produkte definieren; Erstellen (S3) von Produktverknüpfungsdaten zwischen den Produktinformationsdaten; Bereitstellen (S4) von Betriebsdaten der automatisierten Regalvorrichtung; Erstellen (S5) von Datenverknüpfungsdaten zwischen den Betriebsdaten und den Planogrammdaten; und Berechnen (S6) von Benutzerinteraktionsdaten basierend auf den bereitgestellten Planogrammdaten, den bereitgestellten Produktinformationsdaten, den erstellten Produktverknüpfungsdaten, den bereitgestellten Betriebsdaten und den erstellten Datenverknüpfungsdaten.

## Beschreibung

### Technisches Gebiet

Die vorliegende Erfindung betrifft automatisierte und intelligenten Lager- oder Kommissionierungssystems.

Insbesondere betrifft die vorliegende Erfindung Systeme und Verfahren für eine automatisierte Regalvorrichtung eines intelligenten Lager- oder Kommissionierungssystems.

### Technischer Hintergrund

Aktuell werden Softwarelösungen bei der Regalplanung verwendet. Softwarelösungen für die Regaloptimierung dienen im Einsatz im Handelsgewerbe dazu, in Verkaufsräumen oder sonstigen Geschäftsraum, in dem Waren oder Dienstleistungen gewerblich zum Verkauf angeboten werden, Produkte in Menge und Platzierung so anzuordnen, dass sie einen maximalen Umsatzerlös erwirtschaften.

Die Produkte der weitläufig eingesetzten Softwarelösungen umfassen eine statische Regalplanung, welche die Bestückung des Regals schematisch darstellt.

Die US 2014 156 459 A1 beschreibt eine Anzeige des Produktstandorts im Regal per erweiterter Realität, auf Englisch "augmented reality", kurz AR. Unter AR versteht man die computergestützte Erweiterung der Realitätswahrnehmung.

Die US 2014 156 459 A1 beschreibt ein Verfahren und System, welches auf einer tragbaren elektronischen Vorrichtung eine grafische Echtzeitansicht einer Produktanzeige im Laden erstellt, die den Standort eines oder mehrerer Zielprodukte auf der Produktanzeige lokalisiert.

Die grafische Ansicht wird durch die Erfassung von Warenausstellungsdaten, wie z. B. einem Videofeed der Produktanzeige im Geschäft, und die Verarbeitung der Daten zum Erkennen des einen oder der mehreren Zielprodukte auf der Grundlage vordefinierter Produkterkennungskriterien, die eindeutig mit den jeweiligen Zielprodukten verknüpft sind, erzeugt.

Die US 2019005570 A1 beschreibt ein Sprachschnittstellen-Shopping-System, das Kunden bei Kaufentscheidungen in einer Einzelhandelsumgebung unterstützen kann, die Suchvariablen aus der Interaktion mit Kunden extrahiert und diese mit spezifischen Geschäftsregeln kombiniert, die auf einem Administrationsserver gespeichert sind.

Das Sprachschnittstellen-Shopping-System ist konfiguriert, um Produkte zu finden, die den Eingaben oder Anforderungen des Kunden entsprechen, und dann ein angeschlossenes Beleuchtungssystem verwendet, um das Produkt oder die Produkte dem Kunden zu präsentieren.

### Zusammenfassung der Erfindung

Es ist eine Aufgabe der vorliegenden Erfindung, eine verbesserte Vorrichtung und ein verbessertes Verfahren für automatisierte Regalvorrichtung eines intelligenten Lager- oder Kommissionierungssystems breitzustellen.

Diese Aufgabe wird durch die Gegenstände der unabhängigen Patentansprüche gelöst. Weiterbildungen und Ausführungsformen sind den abhängigen Patentansprüchen, der Beschreibung und den Figuren der Zeichnungen zu entnehmen.

Ein erster Aspekt der vorliegenden Erfindung betrifft ein Verfahren für eine automatisierte Regalvorrichtung eines intelligenten Lager- oder Kommissionierungssystems, wobei das Verfahren folgende Verfahrensschritte aufweist:
Als ein erster Verfahrensschritt erfolgt ein Bereitstellen von Planogrammdaten, welche die automatisierte Regalvorrichtung abbilden und welche digitale Regalpläne der automatisierten Regalvorrichtung umfassen und welche sukzessiv erweiterbar sind.

Als ein zweiter Verfahrensschritt erfolgt ein Bereitstellen von Produktinformationsdaten, welche in der automatisierten Regalvorrichtung platzierte Produkte definieren.

Als ein dritter Verfahrensschritt erfolgt ein Erstellen von Produktverknüpfungsdaten zwischen den Produktinformationsdaten.

Als ein vierter Verfahrensschritt erfolgt ein Bereitstellen von Betriebsdaten der automatisierten Regalvorrichtung.

Als ein fünfter Verfahrensschritt erfolgt ein Erstellen von Datenverknüpfungsdaten zwischen den Betriebsdaten und den Planogrammdaten.

Als ein sechster Verfahrensschritt erfolgt ein Berechnen von Benutzerinteraktionsdaten basierend auf den bereitgestellten Planogrammdaten, den bereitgestellten Produktinformationsdaten, den erstellten Produktverknüpfungsdaten, den bereitgestellten Betriebsdaten und den erstellten Datenverknüpfungsdaten.

Die vorliegende Erfindung ermöglicht vorteilhaft, durch ein sogenanntes "intelligentes Regal", auch als Smart-Shelf bezeichnetes, Zusatzfunktionen im Bereich der Produktlogistik bereitzustellen.

Die vorliegende Erfindung beschreibt intelligente Regalsysteme, welche Funktionen zum Erfassen, Betätigen und Steuern beinhalten, um eine Befüllung oder Entleerung oder Interaktion der Konsumenten- oder Personalinteraktion zu beschreiben und zu analysieren.

Die vorliegende Erfindung ermöglicht Entscheidungen auf der Grundlage der verfügbaren Daten in prädiktiver oder adaptiver Weise zu treffen. Mit anderen Worten, es erfolgt ein autonomer Betrieb der automatisierten Regalvorrichtung eines intelligenten Lager- oder Kommissionierungssystems, wobei der der autonome Betrieb auf den Datenerfassungsfähigkeiten sowie auf den implementierten Regel-, Steuerungs-, Datenverarbeitungs- und Netzwerkfähigkeiten der automatisierten Regalvorrichtung basiert.

Mit ihm soll es möglich gemacht werden, Konsumenteninteraktion am Verkaufsregal im stationären Einzelhandel zu erkennen.

Die vorliegende Erfindung ermöglicht, eine Verbesserung des Kundenerlebnisses im stationären Fach- und Einzelhandel beim Kauf und bei der Beratung zu einem Produkt des intelligenten Lager- oder Kommissionierungssystems zu erreichen.

Die vorliegende Erfindung ermöglicht, eine Unterstützung des Kunden bei der Auswahl des richtigen Produkts und/der des zu dem Produkt zugehörigen Zubehörs bereitzustellen.

Die vorliegende Erfindung ermöglicht, eine produkt- oder servicebezogene Kundenführung des Kunden zum Standort des Produkts im Markt per (Leit)-Telematik bereitzustellen, die Abteilung, das Regal oder das Fach des Produktes werden berechnet und an den Benutzer ausgegeben. Die vorliegende Erfindung ermöglicht, produktbezogene Mitteilungen oder servicebezogener Mitteilungen oder Aktualisierungen während der Kundenführung zum Produkt auszugeben.

Die vorliegende Erfindung ermöglicht, ein interaktives Informationssystem (Produktstandort / -eignung / -information) bereitzustellen.

Die vorliegende Erfindung ermöglicht, ein smarte und/oder digitale Optimierung und Verknüpfung der operativen Kernprozesse rund um das Regalsystem im stationären Fach- und Einzelhandel bereitzustellen: Dies umfasst die Planung, Montage, die Befüllung sowie Kundenleitsysteme und den Abverkauf.

Entgegen dem Stand der Technik wird erfindungsgemäß somit vorteilhaft ein in sich geschlossenes Gesamtsystem bereitgestellt, das auf digitale, erweiterte Regalpläne, auch als Planogramme bezeichnet, aufbaut und eine Erweiterung der Planogramm-Informationen durch Produktinformationen ermöglicht.

Die vorliegende Erfindung ermöglicht, Produktverknüpfungen, beispielsweise "Schraube + passende Mutter", zu generieren und entsprechende produktbezogene Mitteilungen oder servicebezogener Mitteilungen oder Aktualisierungen auszugeben.

Die vorliegende Erfindung ermöglicht, eine Verknüpfung der Planogramm-Informationen mit operativen Datenquellen vorzusehen, dies kann Preise, Inventar, Kundenverhalten, Abverkauf, und sonstige Parameter umfassen.

Die vorliegende Erfindung ermöglicht, eine Verknüpfung der Planogramm-Informationen mit Hardware bereitzustellen: "Smart Shelf", digitales Kundenleitsystem und/oder Kundeninteraktionssystem mit Produktortung und Produktberatung zu ermöglichen.

Entsprechend kann durch die vorliegende Erfindung auch Personal beim Befüllen des intelligenten bzw. automatisierten Regalsystems mit Artikeln und Produkten intelligent geleitet werden.

Die vorliegende Erfindung ermöglicht eine automatisierte Regalvorrichtung, auch als SWG Store Plattform bezeichnet, bereitzustellen und ist eine vollintegrierte Prozesskette mit allen Daten vom Lieferanten zum stationären Fach- / Einzelhändler zum Endkunden ohne Datenbruch.

Die vorliegende Erfindung ermöglicht beispielsweise eine Integration von Feedback-Schleifen, z.B. Kundenverhalten an Händler und Lieferant.

Die vorliegende Erfindung ermöglicht beispielsweise eine Optimierung operativer Prozesse durch Datenintegration (z.B. Regalplanung, Abverkaufsanalyse, Preismanagement, Stockmanagement.

Die vorliegende Erfindung ermöglicht beispielsweise eine verbesserte Navigation des Kunden zum Markt und/oder Regal und/oder Produkt, Kundenleitsystem mit Smart Shelf.

Vorteilhafte Ausgestaltungen der vorliegenden Erfindung sind den Unteransprüchen zu entnehmen.

In einer vorteilhaften Ausführungsform der vorliegenden Erfindung ist vorgesehen, dass die Benutzerinteraktionsdaten Daten bezüglich des vom Kunden benötigten Produkts sowie Daten von mindestens einem dem benötigten Produkt zugehörigen Ergänzungsprodukt umfassen;
wobei vorzugsweise die Benutzerinteraktionsdaten:
- i) per Sprachausgabe über eine Schallerzeugungsvorrichtung; oder
- ii) per Visualisierungsausgabe über eine Anzeigevorrichtung; oder
- iii) über ein Mobilgerät
an den Kunden übermittelt werden.

In einer vorteilhaften Ausführungsform der vorliegenden Erfindung ist vorgesehen, dass die Daten zu der Produktortung durch eine Änderung einer Beleuchtung der automatisierten Regalvorrichtung angezeigt werden, wobei vorzugsweise die Daten zu der Produktortung in der Form einer Ausgabe einer Regalnummer oder einer Regalfachnummer dem Kunden angezeigt werden. Die Änderung der Beleuchtung der automatisierten Regalvorrichtung kann eine Änderung einer Beleuchtungsstärke oder das Einsetzten eines Beleuchtungsfokus oder Spotbeleuchtung umfassen.

In einer vorteilhaften Ausführungsform der vorliegenden Erfindung ist vorgesehen, dass die Benutzerinteraktionsdaten Produktverknüpfungsdaten für eine logische Verknüpfung von für den Kunden mit dem benötigten Produkt assoziierten Produkten umfassen.

In einer vorteilhaften Ausführungsform der vorliegenden Erfindung ist vorgesehen, dass die Benutzerinteraktionsdaten für ein Befüllen der automatisierten Regalvorrichtung berechnet werden und die Benutzerinteraktionsdaten Daten zu einer Produktortung oder zu einer Anzahl von aufzufüllenden Produkten umfassen.

In einer vorteilhaften Ausführungsform der vorliegenden Erfindung ist vorgesehen, dass die Benutzerinteraktionsdaten für das Befüllen der automatisierten Regalvorrichtung Daten für einen Aufbau- und/oder eine Bestückung der automatisierten Regalvorrichtung umfassen.

In einer vorteilhaften Ausführungsform der vorliegenden Erfindung ist vorgesehen, dass die Benutzerinteraktionsdaten für das Befüllen der automatisierten Regalvorrichtung basierend auf Scandaten eines auf dem aufzufüllenden Produkt angebrachten Barcodes erstellt werden.

In einer vorteilhaften Ausführungsform der vorliegenden Erfindung ist vorgesehen, dass die Benutzerinteraktionsdaten für das Befüllen der automatisierten Regalvorrichtung basierend auf Scandaten eines auf der automatisierten Regalvorrichtung angebrachten Barcodes erstellt werden.

In einer vorteilhaften Ausführungsform der vorliegenden Erfindung ist vorgesehen, dass die Produktverknüpfungen zwischen den Produktinformationen Verknüpfungen zwischen zusammengehörigen oder gekoppelten Produkten umfassen.

In einer vorteilhaften Ausführungsform der vorliegenden Erfindung ist vorgesehen, dass die Produktinformationsdaten:
- i) Preisdaten; oder
- ii) Inventardaten; oder
- iii) Kundenverhaltensdaten; oder
- iv) Abverkaufsdaten
der in der automatisierten Regalvorrichtung platzierten Produkte umfassen.

In einer vorteilhaften Ausführungsform der vorliegenden Erfindung ist vorgesehen, dass die Produktinformationsdaten durch eine an der automatisierten Regalvorrichtung angebrachte Produktdatenanzeigenvorrichtung angezeigt werden.

In einer vorteilhaften Ausführungsform der vorliegenden Erfindung ist vorgesehen, dass basierend auf den Benutzerinteraktionsdaten, den bereitgestellten Planogrammdaten, den bereitgestellten Produktinformationsdaten, den erstellten Produktverknüpfungsdaten, den bereitgestellten Betriebsdaten und den erstellten Datenverknüpfungsdaten
- i) eine Abverkaufsanalyse für die automatisierte Regalvorrichtung; oder
- ii) eine Produktsuchanalyse; oder
- iii) eine Optimierung der Planogrammdaten der automatisierten Regalvorrichtung; oder
- iv) eine Allgemeinstatistik für die automatisierte Regalvorrichtung
berechnet wird.

Nach einem zweiten Aspekt der vorliegenden Erfindung ist eine Automatisierte Regalvorrichtung für ein intelligentes Lager- oder Kommissionierungssystem vorgesehen, wobei die automatisierte Regalvorrichtung ein Bereitstellungsmodul, ein Verknüpfungsmodul und ein Berechnungsmodul umfasst.

Das Bereitstellungsmodul ist dazu ausgebildet, Planogrammdaten bereitzustellen, welche die automatisierte Regalvorrichtung abbilden und welche digitale Regalpläne der automatisierten Regalvorrichtung umfassen und welche sukzessiv erweiterbar sind; wobei das Bereitstellungsmodul ferner dazu ausgebildet ist, Produktinformationsdaten bereitzustellen, welche in der automatisierten Regalvorrichtung platzierte Produkte definieren.

Das Verknüpfungsmodul ist dazu ausgebildet, Datenverknüpfungsdaten zwischen den Betriebsdaten und den Planogrammdaten zu erstellen; wobei das Verknüpfungsmodul ferner dazu ausgebildet ist, Datenverknüpfungsdaten zwischen den Betriebsdaten und den Planogrammdaten zu erstellen.

Das Berechnungsmodul ist dazu ausgebildet, Benutzerinteraktionsdaten basierend auf den bereitgestellten Planogrammdaten, den bereitgestellten Produktinformationsdaten, den erstellten Produktverknüpfungsdaten, den bereitgestellten Betriebsdaten und den erstellten Datenverknüpfungsdaten zu berechnen.

Nach einem dritten Aspekt umfasst die vorliegende Erfindung ein Computerprogramm oder ein Computerprogrammprodukt, umfassend Befehle, die bei der Ausführung des Programms durch einen Computer diesen veranlassen, dass die Schritte des Verfahrens nach dem ersten Aspekt oder einer beliebigen Ausführungsform des ersten Aspektes ausgeführt werden.

Nach einem vierten Aspekt umfasst die vorliegende Erfindung ein Computerlesbares Speichermedium, umfassend Befehle, die bei der Ausführung durch einen Computer diesen veranlassen, die Schritte des Verfahrens nach dem ersten Aspekt oder einer beliebigen Ausführungsform des ersten Aspektes ausgeführt werden.

Nach einem fünften Aspekt umfasst die vorliegende Erfindung ein Rechnernetz umfassend die automatisierte Regalvorrichtung nach dem zweiten Aspekt oder einer beliebigen Ausführungsform des zweiten Aspektes ferner umfassend eine Datenbank, welche eine webbasierte und/oder interaktive Produktdistributionsanwendung aufweist, welche dazu ausgebildet ist, die Produkte aus der automatisierten Regalvorrichtung einem Kunden anzubieten.

Die beschriebenen Ausgestaltungen und Weiterbildungen lassen sich beliebig miteinander kombinieren.

Weitere mögliche Ausgestaltungen, Weiterbildungen und Implementierungen der vorliegenden Erfindung umfassen auch nicht explizit genannte Kombinationen von zuvor oder im Folgenden bezüglich der Ausführungsformen beschriebenen Merkmale der vorliegenden Erfindung.

Die beiliegenden Zeichnungen sollen ein weiteres Verständnis der Ausführungsformen der vorliegenden Erfindung vermitteln.

Die beiliegenden Zeichnungen veranschaulichen Ausführungsformen und dienen im Zusammenhang mit der Beschreibung der Erklärung von Konzepten der vorliegenden Erfindung.

Andere Ausführungsformen und viele der genannten Vorteile ergeben sich im Hinblick auf die Figuren der Zeichnungen. Die dargestellten Elemente der Figuren der Zeichnungen sind nicht notwendigerweise maßstabsgetreu zueinander gezeigt.

### Kurze Beschreibung der Figuren

Es zeigen:
- Fig. 1:: eine schematische Darstellung eines Flussdiagramms eines Verfahrens für eine automatisierte Regalvorrichtung eines intelligenten Lager- oder Kommissionierungssystems gemäß einem Ausführungsbeispiel der vorliegenden Erfindung; und
- Fig. 2:: eine schematische Darstellung einer automatisierten Regalvorrichtung eines intelligenten Lager- oder Kommissionierungssystems gemäß einem Ausführungsbeispiel der vorliegenden Erfindung;
- Fig. 3:: eine schematische Darstellung eines Prozessablaufs eines Verfahrens für eine automatisierte Regalvorrichtung eines intelligenten Lager- oder Kommissionierungssystems gemäß einem Ausführungsbeispiel der vorliegenden Erfindung;
- Fig. 4:: eine schematische Darstellung eines Planungstools für eine automatisierte Regalvorrichtung eines intelligenten Lager- oder Kommissionierungssystems gemäß einem Ausführungsbeispiel der vorliegenden Erfindung;
- Fig. 5:: eine schematische Darstellung einer automatisierten Regalvorrichtung eines intelligenten Lager- oder Kommissionierungssystems gemäß einem Ausführungsbeispiel der vorliegenden Erfindung; und
- Fig. 6:: eine schematische Darstellung eines Verfahrens für eine automatisierte Regalvorrichtung eines intelligenten Lager- oder Kommissionierungssystems gemäß einem Ausführungsbeispiel der vorliegenden Erfindung.

### Detaillierte Beschreibung der Ausführungsbeispiele

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

Die automatisierte Regalvorrichtung, auch als "Smart Shelf" bezeichnet, gemäß einem Ausführungsbeispiel der vorliegenden Erfindung basiert auf einer erweiterten Datengrundlage: beispielsweise ein erweitertes Planogramm in der SWG Store Plattform.

Das Planogramm in der Form der Planogrammdaten ist ein erweiterter Datentyp und kann in einer graphischen Darstellung der Produktpräsentation im Einzelhandel nach Niederlassung, Depot, Gang, Regal und Regalfach entsprechen und ebenso Daten zu dem Produkt umfassen, wie Soll-Oder Ist-Verkaufszahlen, zugehörige und passende Produkte, Lieferoptionen, Lieferzeit, um Verbesserungsmöglichkeiten bei der Produktplatzierung sowie optimale Abmessungen und Standorte für die Produktplatzierung zu bestimmen.

Die Planogrammdaten können ferner auch Text- oder Sprachdaten zur Beratung des Kunden bezüglich des benötigten Produkts sowie zugehöriger Ergänzungsprodukte umfassen, diese Text- oder Sprachdaten können dabei per Sprachsteuerung, Display oder Mobilgerät ausgeben werden. Die Planogrammdaten können Daten über Produktinformation, zu einem Abgleich mit dem in der Filiale vorhandenen oder generell lieferbaren Sortiment umfassen.

Die Planogrammdaten können ferner auch Koordinatendaten oder Gebietsdaten umfassen, welche zur Lokalisierung des Produkts für den Kunden verwendet werden, indem der Ort des Produkts und/oder das Fach des Produkts im Regal angezeigt wird.

Planogrammdaten können sowohl grafische Daten als auch strukturierte Datensätze zu Produkten oder Artikeln umfassen.

Die Planogrammdaten können in der Form eines speziellen Planogrammdatentyps abgespeichert sein. Der Planogrammdatentyp bezieht sich beispielsweise auf eine grafische Darstellung, die die Anordnung der in der Anlage (in der Regel ein Modul) innerhalb der Filiale gezeigten Waren zeigt. Positionen und Anzahl der anzuzeigenden Artikel werden für einzelne Produkte in dem Planogrammdatentyp gespeichert.

Der Planogrammdatentyp umfasst ferner Umsatzdaten, auf deren Grundlage den einzelnen Produkten relevanter Platz in den Regalen zugewiesen wird, damit der Kunde die gewünschten Artikel an ihrem gewohnten Platz finden kann. Vorrangiges Ziel des Planogrammdatentyps ist die Optimierung des Platzangebots für einzelne Produkte.

Gemäß einem Ausführungsbeispiel der vorliegenden Erfindung ist vorgesehen, dass die gleichen Berechnungen für das gesamte System durchzuführen sind. In diesem Fall sind die Planogramme für identische Filialen an verschiedenen Orten identisch. Eine weitere Möglichkeit ist die Aufteilung nach Regionen, falls Planogramme für eine Reihe von Filialen mit ähnlichen Kriterien erstellt werden.

Gemäß einem Ausführungsbeispiel der vorliegenden Erfindung ist vorgesehen, dass filialspezifische Planogramme den Umsatz in einzelnen Filialen abdecken, indem sie das Planogramm an die den Produkten auf lokaler Ebene zugeteilte Fläche anpassen.

Gemäß einem Ausführungsbeispiel der vorliegenden Erfindung erfolgt basierend auf den Planogrammdaten die Steuerung einer Beleuchtung der automatisierten Regalvorrichtung durch eine Licht- oder LED-anstrahlung des entsprechenden Fachs im jeweiligen Regal der automatisierten Regalvorrichtung.

Mit anderen Worten ausgedrückt, die Beleuchtung der Regalfächer bzw. einzelner Teile der der automatisierten Regalvorrichtung erfolgt durch eine Lichtsteuerungsvorrichtung in gesteuerter Weise.

Gemäß einem Ausführungsbeispiel der vorliegenden Erfindung erfolgt eine Bereitstellung einer automatisierten oder einer maschinengesteuerten oder -unterstützen Interaktionsstrategien und -systeme für die Mensch-Roboter-Interaktion für Arbeitskräfte im Markt. Gemäß einem Ausführungsbeispiel der vorliegenden Erfindung erfolgt beim Einscannen von Produktinformationen wie auf dem Produkt angebracht eine Anzeige des Regalfachs.

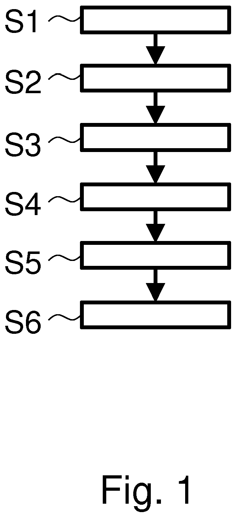

Die Fig. 1 zeigt eine schematische Darstellung eines Flussdiagramms eines Verfahrens für eine automatisierte Regalvorrichtung eines intelligenten Lager- oder Kommissionierungssystems gemäß einem Ausführungsbeispiel der vorliegenden Erfindung.

In einem ersten Verfahrensschritt erfolgt ein Bereitstellen S1 von Planogrammdaten, welche die automatisierte Regalvorrichtung abbilden und welche digitale Regalpläne der automatisierten Regalvorrichtung umfassen und welche sukzessiv erweiterbar sind.

In einem zweiten Verfahrensschritt erfolgt ein Bereitstellen S2 von Produktinformationsdaten, welche in der automatisierten Regalvorrichtung platzierte Produkte definieren.

Als ein dritter Verfahrensschritt erfolgt ein Erstellen S3 von Produktverknüpfungsdaten zwischen den Produktinformationsdaten

In einem vierten Verfahrensschritt erfolgt ein Bereitstellen S4 von Betriebsdaten der automatisierten Regalvorrichtung

Als ein fünfter Verfahrensschritt erfolgt ein Erstellen S5 von Datenverknüpfungsdaten zwischen den Betriebsdaten und den Planogrammdaten.

Als ein sechster Verfahrensschritt erfolgt ein Berechnen S6 von Benutzerinteraktionsdaten basierend auf den bereitgestellten Planogrammdaten, den bereitgestellten Produktinformationsdaten, den erstellten Produktverknüpfungsdaten, den bereitgestellten Betriebsdaten und den erstellten Datenverknüpfungsdaten.

Die vorliegende Erfindung bietet die folgenden technischen Lösungen und Mehrwerte für stationäre Fach- und Einzelhändler:
Die vorliegende Erfindung ermöglicht vorteilhaft eine Optimierung operativer Prozesse durch Smart Shelf Technologie: Eine maschinengestützte, mit einem Benutzer kooperierende und interagierende Aufbauhilfe, Bestückungshilfe.

Die vorliegende Erfindung ermöglicht vorteilhaft einen vereinfachten Regalaufbau durch: Tablet mit Software-Frontend, Etikettenaufbereitung und Etikettendruck, etwa nur ein Gesamtetikett pro Leiste.

Die vorliegende Erfindung ermöglicht vorteilhaft einen Einsatz von verbesserten Kundenleitsystemen durch: Druck speziell designter Regaletikette, etwa ein zweites Gesamtetikett pro Leiste.

Die vorliegende Erfindung ermöglicht vorteilhaft eine smarte Integration und die vorzeitige Erstellung und Berücksichtigung des Kundenleitsystems in der verwendeten Regalplanungssoftware.

Die vorliegende Erfindung ermöglicht vorteilhaft eine Steuerung elektronischer Preisschilder oder eines an der automatisierten Regalvorrichtung angebrachten Dashboards.

Die vorliegende Erfindung ermöglicht vorteilhaft die Bereitstellung einer Analysefunktion: Abverkaufsanalyse, Suchanalyse, Regaloptimierung, allgemeine Statistik Mehrwert für Verbrauchsgüterindustrie (Lieferanten).

Die vorliegende Erfindung ermöglicht vorteilhaft eine erhöhte Flexibilität bei der Regalkonzeptionierung durch Daten-Feedback, intelligente Softwarelösung.

Die vorliegende Erfindung ermöglicht vorteilhaft eine logische Verknüpfung von assoziierten Produkten bereitzustellen, etwa Produktvorschläge.

Die vorliegende Erfindung ermöglicht vorteilhaft eine Erfassung sämtlicher nachgefragter Artikel und Trends, selbst für aktuell nicht lieferbare Produkte.

Die vorliegende Erfindung ermöglicht vorteilhaft eine verbesserte Übersicht durch im Regal integrierte Beleuchtung der angebotenen Produkte.

Die vorliegende Erfindung ermöglicht vorteilhaft eine verbesserte Navigation zum Markt, zum Regal, zum Produkt durch: Web, App, Sprachsteuerung, intelligente - den Kunden oder das Personal leitende - und/oder punktuelle Produktbeleuchtung.

Die vorliegende Erfindung ermöglicht vorteilhaft eine Verbesserung des Kundenerlebnisses: Direkte Beratung, Führung zum gewünschten Artikel, Produktverknüpfung, detaillierte Produktinformation, "spielerischer" Aspekt.

Die vorliegende Erfindung ermöglicht vorteilhaft einen Mehrwert für Produkthersteller und -lieferanten bei der Planung, der Inbetriebnahme und dem laufenden Betrieb der automatisierten Regalvorrichtung. Die komplette Prozesskette kann mit einer IT-Plattform der automatisierten Regalvorrichtung durchgeführt werden. Ferner können erweiterte Dienste und Services wie z.B. Etikettendruck angeboten werden.

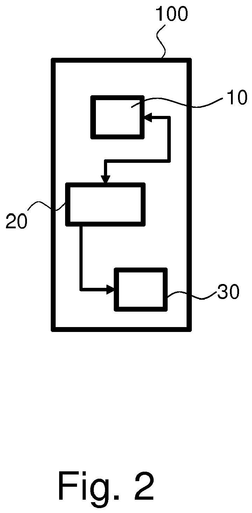

Die Fig. 2 zeigt eine schematische Darstellung einer automatisierten Regalvorrichtung eines intelligenten Lager- oder Kommissionierungssystems gemäß einem Ausführungsbeispiel der vorliegenden Erfindung.

Die automatisierte Regalvorrichtung 100 ist dazu ausgelegt, mit einem intelligenten Lager- oder Kommissionierungssystem gekoppelt zu werden, und umfasst ein Bereitstellungsmodul 10, ein Verknüpfungsmodul 20, und ein Berechnungsmodul 30.

Das Bereitstellungsmodul 10 ist dazu ausgebildet, Planogrammdaten bereitzustellen, welche die automatisierte Regalvorrichtung abbilden und welche digitale Regalpläne der automatisierten Regalvorrichtung umfassen und welche sukzessiv erweiterbar sind; wobei das Bereitstellungsmodul 10 ferner dazu ausgebildet ist, Produktinformationsdaten bereitzustellen, welche in der automatisierten Regalvorrichtung platzierte Produkte definieren.

Das Verknüpfungsmodul 20 ist dazu ausgebildet, Datenverknüpfungsdaten zwischen den Betriebsdaten und den Planogrammdaten zu erstellen; wobei das Verknüpfungsmodul ferner dazu ausgebildet ist, Datenverknüpfungsdaten zwischen den Betriebsdaten und den Planogrammdaten zu erstellen.

Das Berechnungsmodul 30 ist dazu ausgebildet, Benutzerinteraktionsdaten basierend auf den bereitgestellten Planogrammdaten, den bereitgestellten Produktinformationsdaten, den erstellten Produktverknüpfungsdaten, den bereitgestellten Betriebsdaten und den erstellten Datenverknüpfungsdaten zu berechnen.

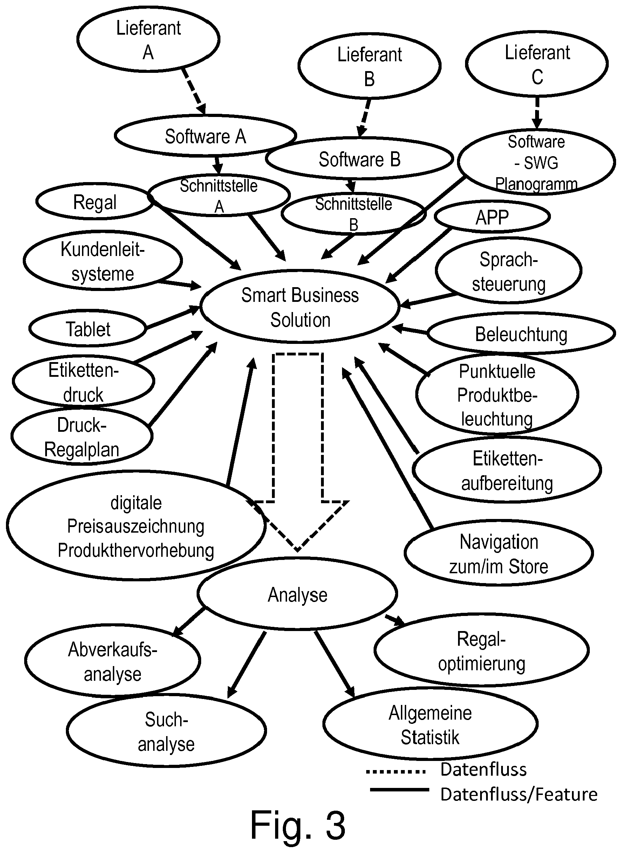

Die Fig. 3 zeigt eine schematische Darstellung eines Prozessablaufs eines Verfahrens für eine automatisierte Regalvorrichtung eines intelligenten Lager- oder Kommissionierungssystems gemäß einem Ausführungsbeispiel der vorliegenden Erfindung.

Unterschiedliche Lieferanten können mit ihren Produkten in das System der automatisierten Regalvorrichtung integriert werden.

Beispielsweise wird ein Lieferant A und ein Lieferant B, welche beide eine abweichende Software A und B einsetzen, jeweils über eine dezidierte Schnittstelle eingebunden.

Dabei kann der Lieferant A beispielsweise über eine Schnittstelle A an eine erste Software A angebunden werden, um Produkte im Regalplan anzuordnen und den Umsatz zu erfassen.

Ebenso kann beispielsweise ein zweiter Lieferant B mit einer abweichenden zweiten Software B an die automatisierte Regalvorrichtung gekoppelt werden und dabei kann eine zweite Schnittstelle B zum Einsatz kommen.

Ein dritter Lieferant C kann beispielsweise durch die Verwendung der internen bzw. systemeigenen Software - auch als "Software SWG Planogramm" bezeichnet - ohne Schnittstelle direkt an die automatisierte Regalvorrichtung gekoppelt werden.

Kunden und Käufer können mit der automatisierten Regalvorrichtung über eine Anwendungsapplikation, App, auf einem Smartphone kommunizieren. Dabei kann eine Sprachsteuerung zum Einsatz kommen.

Ferner kann die automatisierte Regalvorrichtung eine Beleuchtung der einzelnen Produkte steuern und eine punktuelle, d.h. die Aufmerksamkeit des Kunden fokussierende Produktbeleuchtung in Form einer Spotbeleuchtung zum Einsatz kommen.

Ferner kann durch die automatisierte Regalvorrichtung eine Etikettenaufbereitung durchgeführt werden und angezeigte Eigenschaften auf den Etiketten adaptiert werden.

Die automatisierte Regalvorrichtung des intelligenten Lager- oder Kommissionierungssystems kann die Navigation des Kunden zum Einkaufszentrum oder im Store überwachen und gegebenenfalls eingreifen, um den Kunden zur automatisierten Regalvorrichtung zu leiten.

Die automatisierte Regalvorrichtung kann dazu ausgebildet sein, eine Analyse bereitzustellen, d.h. eine Abverkaufsanalyse, oder eine Suchanalyse darzustellen bzw. durchzuführen.

Die automatisierte Regalvorrichtung kann dazu ausgebildet sein, eine Regaloptimierung bereitzustellen.

Die automatisierte Regalvorrichtung kann dazu ausgebildet sein, eine allgemeine Statistik durchzuführen.

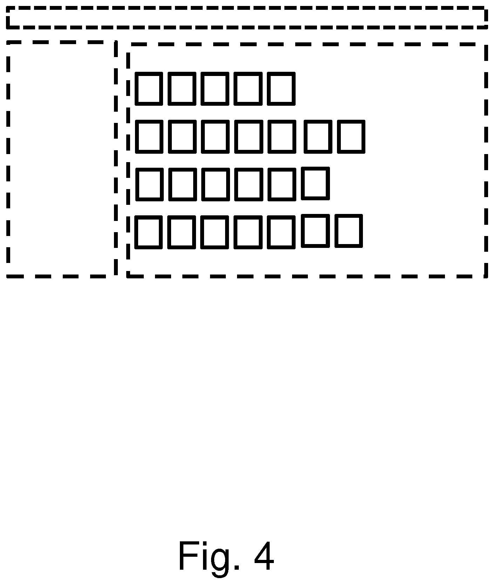

Die Fig. 4 zeigt eine schematische Darstellung eines Planungstools für eine automatisierte Regalvorrichtung eines intelligenten Lager- oder Kommissionierungssystems gemäß einem Ausführungsbeispiel der vorliegenden Erfindung.

Das Planungstool kann gemäß einem weiteren Ausführungsbeispiel der vorliegenden Erfindung ferner dazu ausgebildet sein, Planogramme zu generieren. Das Planungstool kann gemäß einem weiteren Ausführungsbeispiel der vorliegenden Erfindung ferner dazu ausgebildet sein, Planogramme basierend auf Platzierungsregeln zu erstellen.

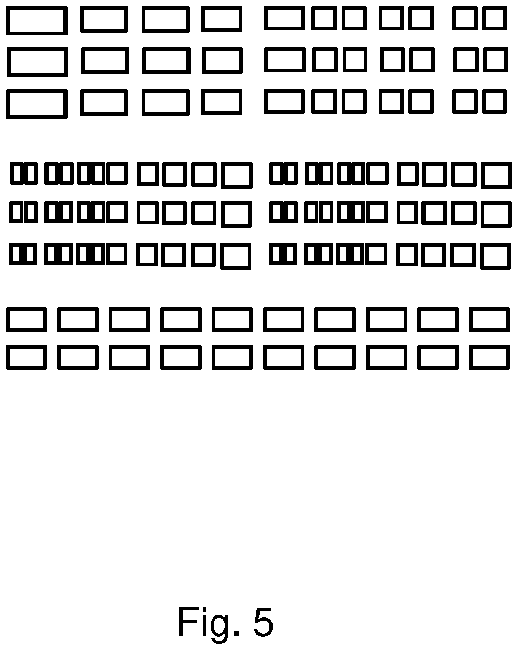

Die Fig. 5 zeigt eine schematische Darstellung einer automatisierten Regalvorrichtung eines intelligenten Lager- oder Kommissionierungssystems gemäß einem Ausführungsbeispiel der vorliegenden Erfindung.

Das in der Fig. 5 dargestellte Planogramme basiert auf vorgegebenen Kriterien und wurde beispielsweise mit dem Planungstool erstellt, beispielsweise können hierbei Abverkaufsanalysen oder Planungsregeln oder Kundenspezifikationen berücksichtigt werden.

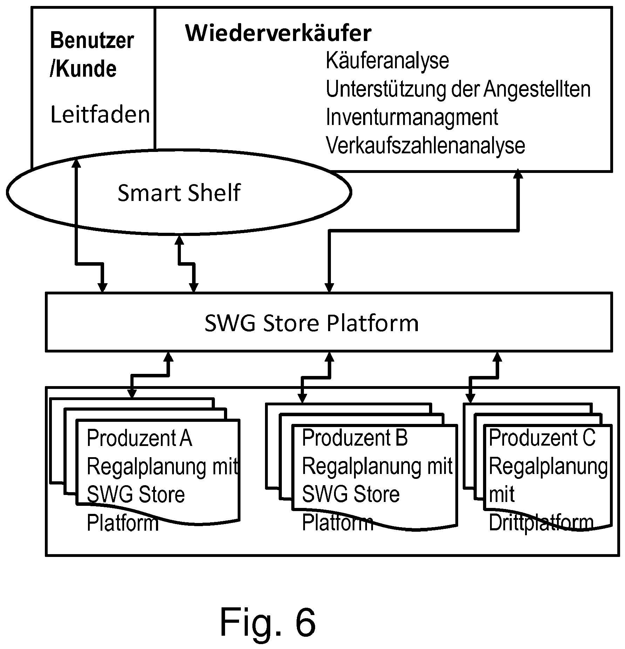

Die Fig. 6 zeigt eine schematische Darstellung eines Ablaufs eines Verfahrens für eine automatisierte Regalvorrichtung eines intelligenten Lager- oder Kommissionierungssystems gemäß einem Ausführungsbeispiel der vorliegenden Erfindung.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Ergänzend sei darauf hingewiesen, dass "umfassend" und "aufweisend" keine anderen Elemente oder Schritte ausschließt und "eine" oder "ein" keine Vielzahl ausschließt.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren für eine automatisierte Regalvorrichtung eines intelligenten Lager- oder Kommissionierungssystems, wobei das Verfahren folgende Verfahrensschritte aufweist:
- Bereitstellen (S1) von Planogrammdaten, welche die automatisierte Regalvorrichtung abbilden und welche digitale Regalpläne der automatisierten Regalvorrichtung umfassen und welche sukzessiv erweiterbar sind;
- Bereitstellen (S2) von Produktinformationsdaten, welche in der automatisierten Regalvorrichtung platzierte Produkte definieren;
- Erstellen (S3) von Produktverknüpfungsdaten zwischen den Produktinformationsdaten;
- Bereitstellen (S4) von Betriebsdaten der automatisierten Regalvorrichtung;
- Erstellen (S5) von Datenverknüpfungsdaten zwischen den Betriebsdaten und den Planogrammdaten; und
- Berechnen (S6) von Benutzerinteraktionsdaten basierend auf den bereitgestellten Planogrammdaten, den bereitgestellten Produktinformationsdaten, den erstellten Produktverknüpfungsdaten, den bereitgestellten Betriebsdaten und den erstellten Datenverknüpfungsdaten.

2. Verfahren nach Patentanspruch 1,
wobei die Benutzerinteraktionsdaten für einen Kunden berechnet werden, welcher mindestens ein Produkt aus der Vielzahl der in der automatisierten Regalvorrichtung platzierten Produkte benötigt, und die Benutzerinteraktionsdaten Daten zu einer Produktortung oder zu einer Produktberatung für das benötigte Produkt umfassen.

3. Verfahren nach Patentanspruch 2,
wobei die Benutzerinteraktionsdaten Daten bezüglich des vom Kunden benötigten Produkts sowie Daten von mindestens einem dem benötigten Produkt zugehörigen Ergänzungsprodukt umfassen;
wobei vorzugsweise die Benutzerinteraktionsdaten:
- i) per Sprachausgabe über eine Schallerzeugungsvorrichtung; oder
- ii) per Visualisierungsausgabe über eine Anzeigevorrichtung; oder
- iii) über ein Mobilgerät
an den Kunden übermittelt werden.

4. Verfahren nach einem der vorhergehenden Patentansprüche 2 bis 3,
wobei die Daten zu der Produktortung durch eine Änderung einer Beleuchtung der automatisierten Regalvorrichtung angezeigt werden,
wobei vorzugsweise die Daten zu der Produktortung in der Form einer Ausgabe einer Regalnummer oder einer Regalfachnummer dem Kunden angezeigt werden.

5. Verfahren nach einem der vorhergehenden Patentansprüche 2 bis 4, wobei die Benutzerinteraktionsdaten Produktverknüpfungsdaten für eine logische Verknüpfung von für den Kunden mit dem benötigten Produkt assoziierten Produkten umfassen.

6. Verfahren nach einem der vorhergehenden Patentansprüche,
wobei die Benutzerinteraktionsdaten für ein Befüllen der automatisierten Regalvorrichtung berechnet werden und die Benutzerinteraktionsdaten Daten zu einer Produktortung oder zu einer Anzahl von aufzufüllenden Produkten umfassen.

7. Verfahren nach Patentanspruch 6,
wobei die Benutzerinteraktionsdaten für das Befüllen der automatisierten Regalvorrichtung Daten für einen Aufbau- und/oder eine Bestückung der automatisierten Regalvorrichtung umfassen.

8. Verfahren nach Patentanspruch 6 oder 7,
wobei die Benutzerinteraktionsdaten für das Befüllen der automatisierten Regalvorrichtung basierend auf Scandaten eines auf dem aufzufüllenden Produkt angebrachten Barcodes erstellt werden.

9. Verfahren nach einem der vorhergehenden Patentansprüche 6 bis 8,
wobei die Benutzerinteraktionsdaten für das Befüllen der automatisierten Regalvorrichtung basierend auf Scandaten eines auf der automatisierten Regalvorrichtung angebrachten Barcodes erstellt werden.

10. Verfahren nach einem der vorhergehenden Patentansprüche, wobei die Produktverknüpfungen zwischen den Produktinformationen Verknüpfungen zwischen zusammengehörigen oder gekoppelten Produkten umfassen.

11. Verfahren nach einem der vorhergehenden Patentansprüche,
wobei die Produktinformationsdaten:
- i) Preisdaten; oder
- ii) Inventardaten; oder
- iii) Kundenverhaltensdaten; oder
- iv) Abverkaufsdaten
der in der automatisierten Regalvorrichtung platzierten Produkte umfassen.

12. Verfahren nach einem der vorhergehenden Patentansprüche,
wobei die Produktinformationsdaten durch eine an der automatisierten Regalvorrichtung angebrachte Produktdatenanzeigenvorrichtung angezeigt werden.

13. Verfahren nach einem der vorhergehenden Patentansprüche,
wobei basierend auf den Benutzerinteraktionsdaten, den bereitgestellten Planogrammdaten, den bereitgestellten Produktinformationsdaten, den erstellten Produktverknüpfungsdaten, den bereitgestellten Betriebsdaten und den erstellten Datenverknüpfungsdaten
- i) eine Abverkaufsanalyse für die automatisierte Regalvorrichtung; oder
- ii) eine Produktsuchanalyse; oder
- iii) eine Optimierung der Planogrammdaten der automatisierten Regalvorrichtung; oder
- iv) eine Allgemeinstatistik für die automatisierte Regalvorrichtung
berechnet wird.

14. Automatisierte Regalvorrichtung (100) für ein intelligentes Lager- oder Kommissionierungssystem, wobei die automatisierte Regalvorrichtung umfasst:
- ein Bereitstellungsmodul (10), welches dazu ausgebildet ist, Planogrammdaten bereitzustellen, welche die automatisierte Regalvorrichtung abbilden und welche digitale Regalpläne der automatisierten Regalvorrichtung umfassen und welche sukzessiv erweiterbar sind; wobei das Bereitstellungsmodul (10) ferner dazu ausgebildet ist, Produktinformationsdaten bereitzustellen, welche in der automatisierten Regalvorrichtung platzierte Produkte definieren;
- ein Verknüpfungsmodul (20), welches dazu ausgebildet ist, Datenverknüpfungsdaten zwischen den Betriebsdaten und den Planogrammdaten zu erstellen; wobei das Verknüpfungsmodul ferner dazu ausgebildet ist, Datenverknüpfungsdaten zwischen den Betriebsdaten und den Planogrammdaten zu erstellen; und
- ein Berechnungsmodul (30), welches dazu ausgebildet ist, Benutzerinteraktionsdaten basierend auf den bereitgestellten Planogrammdaten, den bereitgestellten Produktinformationsdaten, den erstellten Produktverknüpfungsdaten, den bereitgestellten Betriebsdaten und den erstellten Datenverknüpfungsdaten zu berechnen.

15. Rechnernetz umfassend die automatisierte Regalvorrichtung nach Patentanspruch 14,
ferner umfassend eine Datenbank, welche eine webbasierte und/oder interaktive Produktdistributionsanwendung aufweist, welche dazu ausgebildet ist, die Produkte aus der automatisierten Regalvorrichtung einem Kunden anzubieten.
